# EUROPÄISCHE PATENTSCHRIFT

(11) **EP 3 745 091 B1**
(45) Veröffentlichungstag und Bekanntmachung des Hinweises auf die Patenterteilung: **29.06.2022**
(21) Anmeldenummer: 20174282.2
(22) Anmeldetag: 13.05.2020
(51) Int. Cl.: G01D 11/24

(54) **SENSORVORRICHTUNG FÜR EIN SCHIENENFAHRZEUG UND SCHIENENFAHRZEUG**
RAIL VEHICLE AND SENSOR DEVICE FOR A RAIL VEHICLE
DISPOSITIF CAPTEUR POUR UN VÉHICULE FERROVIAIRE ET VÉHICULE FERROVIAIRE

(30) Priorität: 31.05.2019 DE 102019208019
(43) Veröffentlichungstag der Anmeldung: 02.12.2020
(73) Patentinhaber: Siemens Mobility GmbH, 81739 München (DE)
(72) Erfinder: Enser, Bernd, 90411 Nürnberg (DE)

(56) Entgegenhaltungen:
- EP-A1- 2 835 302
- DE-A1-102008 042 314
- DE-A1-102017 217 099
- US-A1- 2019 162 604

## Beschreibung

Es werden eine Sensorvorrichtung für ein Schienenfahrzeug und ein Schienenfahrzeug angegeben. EP 2 835 302 A1 zeigt eine bekannte Sensorvorrichtung für ein Schienenfahrzeug. DE 10 2008 042 314 A1 und US2019/162604 A1 zeigen weitere bekannte Sensorvorrichtungen.

Um einen Parameter, beispielsweise die Temperatur, eines Traktionsmotors oder eines Traktionsgetriebes eines Schienenfahrzeugs zu messen, ist es erforderlich, einen geeigneten Sensor am Motor oder Getriebe oder zumindest in unmittelbarer Nähe davon anzubringen. Aufgrund von Bauraumproblemen und rauen Umgebungsbedingungen kann dies jedoch einige Schwierigkeiten mit sich bringen, da insbesondere auch eine Reihe von Normen und Vorgaben zu beachten sind:
- Schutzart IP68 nach DIN EN 61373
- Vibrationsfestigkeit bis zu 300 m/s² nach DIN EN 61373
- Schockfestigkeit bis zu 1000 m/s² nach DIN EN 61373
- dauerhafter Korrosionsschutz und Steinschlagschutz
- Temperaturtauglichkeit des Sensorgehäuses im Betrieb im Bereich von -40°C bis 120°C
- Temperaturtauglichkeit des Fühlerkopfs im Betrieb im Bereich von -40°C bis 250°C
- EMV-Störfestigkeit nach DIN EN 50121-3-2
- Brandschutz nach DIN EN 45545-2,-5,-6

Ausgehend hiervon liegt der Erfindung die Aufgabe zugrunde, eine Sensorvorrichtung anzugeben, die für ein Schienenfahrzeug, beispielsweise in Verbindung mit einem Traktionsmotor oder Traktionsgetriebe, verwendet werden kann.

Zumindest eine weitere Aufgabe liegt darin, ein Schienenfahrzeug mit einer Sensorvorrichtung anzugeben.

Diese Aufgaben werden durch Gegenstände gemäß den unabhängigen Patentansprüchen gelöst. Vorteilhafte Ausführungsformen und Weiterbildungen der Gegenstände sind in den abhängigen Ansprüchen gekennzeichnet und gehen weiterhin aus der nachfolgenden Beschreibung und den Zeichnungen hervor.

Gemäß einer Ausführungsform weist eine Sensorvorrichtung, die besonders bevorzugt eine Sensorvorrichtung für ein Schienenfahrzeug ist, einen Sensorkopf mit zumindest einem Sensorelement auf, das im Betrieb ein analoges Messsignal bereitstellt. Besonders bevorzugt ist das zumindest eine Sensorelement zur Messung zumindest eines oder mehrerer der folgenden Parameter vorgesehen und eingerichtet: Temperatur, Beschleunigung, Vibration. Mit anderen Worten ist das Sensorelement besonders bevorzugt ein Temperatursensor, ein Beschleunigungssensor und/oder ein Vibrationssensor. Das zumindest eine Sensorelement ist bevorzugt im oder am Sensorkopf befestigt, in dem weiterhin bevorzugt die Zuleitungen für das zumindest eine Sensorelement geführt werden. Das Sensorelement ist beispielsweise als Sensorchip basierend auf einem Heißleiter-Material oder einem Kaltleiter-Material oder als mikroelektromechanisches System (MEMS) ausgebildet.

In der nachfolgenden Beschreibung wird die Sensorvorrichtung zumeist mit einem Sensorelement beschrieben. Alternativ hierzu kann die Sensorvorrichtung auch einen Sensorkopf aufweisen, der mehr als ein Sensorelement aufweist. Die im Folgenden beschriebenen Merkmale in Verbindung mit einem Sensorelement gelten entsprechend auch für eine Sensorvorrichtung mit einem Sensorkopf, der eine Mehrzahl von Sensorelementen aufweist. Hierbei kann der Sensorkopf gleiche und/oder verschiedene Sensorelemente aufweisen.

Gemäß einer weiteren Ausführungsform weist ein Schienenfahrzeug die Sensorvorrichtung auf. Besonders bevorzugt weist das Schienenfahrzeug ein Antriebselement auf, das beispielsweise einen Motor wie etwa einen Traktionsmotor und/oder ein Getriebe wie etwa ein Traktionsgetriebe aufweist. Die Sensorvorrichtung ist bevorzugt am Antriebselement angeordnet. Entsprechend ist die Sensorvorrichtung besonders bevorzugt dazu vorgesehen und eingerichtet, zumindest einen Parameter des Antriebselements zu messen. Der eine oder die mehreren Parameter sind beispielsweise ausgewählt aus einer Temperatur, einer Beschleunigung, einer Vibration oder einer Kombination oder einer Mehrzahl dieser Parameter. Die norm- und vorgabengerechte Integration einer Sensorvorrichtung beispielsweise an einem Traktionsmotor oder Traktionsgetriebe ist oft aufgrund von Bauraumproblemen und den Umweltbedingungen am Sensorort schwierig. Dies gilt insbesondere auch, beispielsweise in Bezug auf den Bauraum und eine erforderliche mechanische Schnittstellen-Gleichheit, wenn die Sensorvorrichtung nachgerüstet werden soll. Mit der vorliegend beschriebenen Sensorvorrichtung ist vorzugsweise eine solche Integration einfacher möglich als mit bekannten Sensorlösungen.

Die vorherige und nachfolgende Beschreibung bezieht sich gleichermaßen auf die Sensorvorrichtung und auf das Schienenfahrzeig mit der Sensorvorrichtung.

Die Sensorvorrichtung weist weiterhin ein elektronisches Bauelement auf, das zumindest eine Wandlerelektronik aufweist, die aus dem analogen Messsignal ein digitales Signal erzeugt. Das digitale Signal kann zur weiteren Verarbeitung zu einer Datenverarbeitungsvorrichtung, beispielsweise einer Auswerteeinheit und/oder einer Steuerungseinheit, geleitet werden, die entfernt vom Einbauort der Sensorvorrichtung angeordnet ist und an die die Sensorvorrichtung angeschlossen werden kann. Insbesondere kann es möglich sein, dass sich eine solche Datenverarbeitungsvorrichtung entfernt vom Antriebselement, an dem die Sensorvorrichtung angeordnet ist, befindet. Durch die Wandlung des analogen Messsignals in das digitale Signal ist die Weiterleitung wesentlich einfacher möglich, da digitale Signale beispielsweise in Bezug auf elektromagnetische Störungen deutlich weniger störanfällig sind als analoge Signale. Daher sind für digitale Signale im Vergleich zu analogen Signalen erheblich geringere Anforderungen, beispielsweise in Bezug auf eine Leitungsschirmung und eine maximal mögliche Leitungslänge, zu beachten. Weiterhin bieten digitale Signale gegenüber analogen Signalen den Vorteil einer besseren Trennbarkeit der Leitungen, beispielsweise in Form eines Steckers, was mit analogen Signalen beziehungsweise analoge Signale führenden Leitungen nicht immer ohne Einschränkungen so einfach möglich ist.

Weiterhin weist die Sensorvorrichtung ein Entkopplungselement auf, das das analoge Messsignal vom Sensorkopf zu einem Eingang des elektronischen Bauelements leitet und das das elektronische Bauelement zumindest teilweise thermisch und/oder mechanisch vom Sensorkopf entkoppelt. Bevorzugt entkoppelt das Entkopplungselement den Sensorkopf und das elektronische Bauelement zumindest teilweise mechanisch und zumindest thermisch voneinander. Entsprechend ist das Entkopplungselement zwischen dem Sensorkopf und dem elektronischen Bauelement angeordnet. Durch das Entkopplungselement ist es bevorzugt möglich, dass die Übertragung von Wärme und/oder von mechanischen Beeinträchtigungen wie beispielsweise Vibrationen vom Sensorkopf auf das elektronische Bauelement geringer ist als im Fall einer Anordnung des elektronischen Bauelements direkt am oder im Sensorkopf. Würde das elektronische Bauelement oder zumindest die Wandlerelektronik im Sensorkopf angeordnet werden, hätte dies neben hohen Temperaturbelastungen und hohen mechanischen Belastungen, beispielsweise hervorgerufen durch Vibrationen und/oder Schläge auf das Antriebselement im Fahrbetrieb, weiterhin zur Folge, dass der Sensorkopf wesentlich voluminöser wäre als bei der hier beschriebenen Sensorvorrichtung. Bei der hier beschriebenen Sensorvorrichtung kann somit mit Vorteil ein deutlich geringerer Bauraum möglich sein. Das Entkopplungselement ist flexibel und bevorzugt plastisch oder elastisch verformbar, wodurch neben der mechanischen Entkopplung auch eine Flexibilität für die eingebaute Anordnung des elektronischen Bauelements und des Sensorkopfs zueinander ermöglicht werden kann.

Das Entkopplungselement weist eine schlauchförmige Hülle auf, in der zumindest eine elektrische Leitung zur elektrischen Verbindung des Sensorkopfs mit dem elektronischen Bauelement angeordnet ist. Insbesondere weist das Entkopplungselement in der Hülle vorzugsweise alle für den Betrieb des Sensorkopfs und damit für den Betrieb des zumindest einen Sensorelements erforderlichen elektrischen Leitungen auf. So kann das Entkopplungselement beispielsweise auch eine oder mehrere elektrische Leitungen zur elektrischen Spannungs- und/oder Stromversorgung des Sensorkopfs und insbesondere des zumindest einen Sensorelements aufweisen. Die Hülle weist beispielsweise einen Kunststoff wie etwa Silikon und/oder synthetischen Kautschuk auf. Zusätzlich kann die Hülle eine Armierung, beispielsweise in Form eines Metallgeflechts, aufweisen, das die Stabilität der Hülle bei gleichzeitigem Erhalt einer Flexibilität erhöhen kann. Beispielsweise kann die Hülle nach Art eines Hydraulikschlauchs ausgebildet sein. Die zumindest eine elektrische Leitung kann in Form eines geschirmten oder ungeschirmten ein- oder mehradrigen Kabels in der Hülle angeordnet sein.

Des Weiteren weist das Entkopplungselement eine elektromagnetische Schirmung auf. Durch diese kann es besonders bevorzugt möglich sein, dass das durch das Entkopplungselement geführte analoge Messsignal vor elektromagnetischen Störsignalen wie beispielsweise elektromagnetischen Feldern eines Elektromotors geschützt ist. Die elektromagnetische Schirmung ist beispielsweise in Form einer Metallschicht oder eines Metallgeflechts um die zumindest eine elektrische Leitung ausgebildet. Besonders vorteilhaft ist es, wenn die elektromagnetische Schirmung gleichzeitig als Armierung ausgebildet ist. Die Schirmung ist beispielsweise im Material der Hülle eingebettet oder alternativ innerhalb der Hülle angeordnet.

Gemäß einer weiteren Ausführungsform weist das elektronische Bauelement ein rohrförmiges Gehäuse auf, in dem die Wandlerelektronik angeordnet ist. Besonders bevorzugt weist das Gehäuse einen Durchmesser auf, der im Wesentlichen einem Durchmesser der Hülle des Entkopplungselements entspricht.

Dies bedeutet hier und im Folgenden, dass sich der Durchmesser der Hülle und der Durchmesser des Gehäuses um nicht mehr als 20%, bevorzugt um nicht mehr als 10% und besonders bevorzugt um nicht mehr als 5%, jeweils bezogen auf den Durchmesser der Hülle, voneinander unterscheiden. Beispielsweise weist das Gehäuse ein Metall auf oder ist daraus. Dadurch kann eine ausreichende Stabilität sowie eine elektromagnetische Schirmung für die im Gehäuse angeordnete Wandlerelektronik erreicht werden. Entsprechend ist das Gehäuse bevorzugt als Metallrohr ausgebildet. Die Rohrenden weisen bevorzugt Leitungsdurchführungen auf.

Des Weiteren ist das Entkopplungselement dauerhaft jeweils mit dem Sensorkopf und dem elektronischen Bauelement verbunden. Das bedeutet insbesondere, dass das Entkopplungselement unter normalen Betriebs und Wartungsbedingungen nicht vom Sensorkopf und vom elektronischen Bauelement entfernbar ist. Eine dauerhafte Verbindung kann durch eine oder mehrere der folgenden Verbindungstechniken erreicht werden: Pressen, Klemmen, Verschrauben, Verkleben, Vergießen mit einem Kunststoff zumindest im Bereich einer Verbindungsstelle. Bevorzugt wird die dauerhafte Verbindung durch eine Kombination von zumindest zwei oder alle ausgewählt aus Verschrauben, Verkleben und Vergießen gebildet. Somit kann das Entkopplungselement mit dem Sensorkopf und/oder mit dem elektronischen Bauelement beispielsweise verklemmt und/oder verschraubt und/oder verklebt und/oder zumindest teilweise vergossen sein, wobei die Verbindung mit dem Sensorkopf gleich verschieden zur Verbindung mit dem elektronischen Bauelement sein kann. Durch die dauerhafte Verbindung bilden der Sensorkopf, das Entkopplungselement und das elektronische Bauelement bevorzugt eine im normalen Betrieb dauerhafte Einheit.

Das elektronische Bauelement weist weiterhin einen Ausgang auf, an dem das digitale Signal bereitgestellt wird. Der Ausgang ist bevorzugt mit einem Steckerelement verbunden, das ein weiblicher oder männlicher Stecker oder eine entsprechende Buchse sein kann und einen ein- oder mehrkanaligen Datenbus aufweisen kann und über das die Sensorvorrichtung mittels einer elektrischen Steckverbindung mit weiteren elektronischen Komponenten wie beispielsweise einer Strom- und/oder Spannungsversorgung und/oder einer Datenverarbeitungsvorrichtung verbunden werden kann. Der Ausgang des elektronischen Bauelements ist bevorzugt unmittelbar mit dem Steckerelement verbunden. Alternativ hierzu kann zwischen dem Ausgang des elektronischen Bauelements und dem Steckerelement ein Verbindungskabel vorhanden sein, das in der vorab beschriebenen Weise dauerhaft mit dem elektronischen Bauelement verbunden ist. Da am Ausgang des elektronischen Bauelements das aus dem analogen Messsignal erzeugte digitale Signal bereitgestellt wird, sind die elektromagnetischen Schirmungsanforderungen an das Kabel am Ausgang des elektronischen Bauelements mit Vorteil erheblich geringer als an das Entkopplungselement. Weiterhin kann am Ausgang ein weiteres Entkopplungselement angeordnet sein, das eines oder mehrere der vorab beschriebenen Merkmale aufweisen kann. Insbesondere können das Entkopplungselement zwischen dem Sensorkopf und dem elektronischen Bauelement und das weitere Entkopplungselement am Ausgang des elektronischen Bauelements gleich ausgebildet sein oder zumindest in Bezug auf die Hülle gleich sein.

Bei der hier beschriebenen Sensorvorrichtung bildet das elektronische Bauelement bevorzugt eine vom Sensorkopf abgesetzte Digitalisierungsbaugruppe, die besonders bevorzugt ein rohrförmiges Gehäuse aufweist. Das Absetzen der Digitalisierungsbaugruppe vom Sensorkopf und das Anordnen dieser in einem bevorzugt rohrförmigen Gehäuse, das bevorzugt dauerhaft mit dem Entkopplungselement verbunden ist, entkoppelt die Elektronik vom Sensorkopf mechanisch und thermisch.

Weiterhin löst die hier beschriebene Sensorvorrichtung zusätzlich zumindest teilweise das für übliche Sensoren mit im Sensorkopf integrierter Elektronik vorhandene Bauraumproblem, weil das elektronische Bauelement an einer besser wählbaren Stelle des zu messenden Bauteils und nicht am Messort selbst angebracht werden kann. Weiterhin kann die Befestigungsstelle des Gehäuses des elektronischen Bauelements von dem zu messenden Bauteil zusätzlich thermisch und mechanisch entkoppelt werden, beispielsweise mittels eines elastischen, aber temperaturstabilen Kunststoffs.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert.

Es zeigen:
Figur 1 eine schematische Darstellung einer Sensorvorrichtung gemäß einem Ausführungsbeispiel,
Figur 2 eine schematische ausschnittsweise Darstellung einer Sensorvorrichtung gemäß einem weiteren Ausführungsbeispiel,
Figuren 3 und 4 schematische Darstellungen einer Sensorvorrichtung gemäß einem weiteren Ausführungsbeispiel und
Figur 5 eine schematische Darstellung eines Schienenfahrzeugs gemäß einem weiteren Ausführungsbeispiel.

In den Ausführungsbeispielen und Figuren können gleiche, gleichartige oder gleich wirkende Elemente jeweils mit denselben Bezugszeichen versehen sein. Die dargestellten Elemente und deren Größenverhältnisse untereinander sind nicht als maßstabsgerecht anzusehen, vielmehr können einzelne Elemente, wie zum Beispiel Schichten, Bauteile, Bauelemente und Bereiche, zur besseren Darstellbarkeit und/oder zum besseren Verständnis übertrieben groß dargestellt sein.

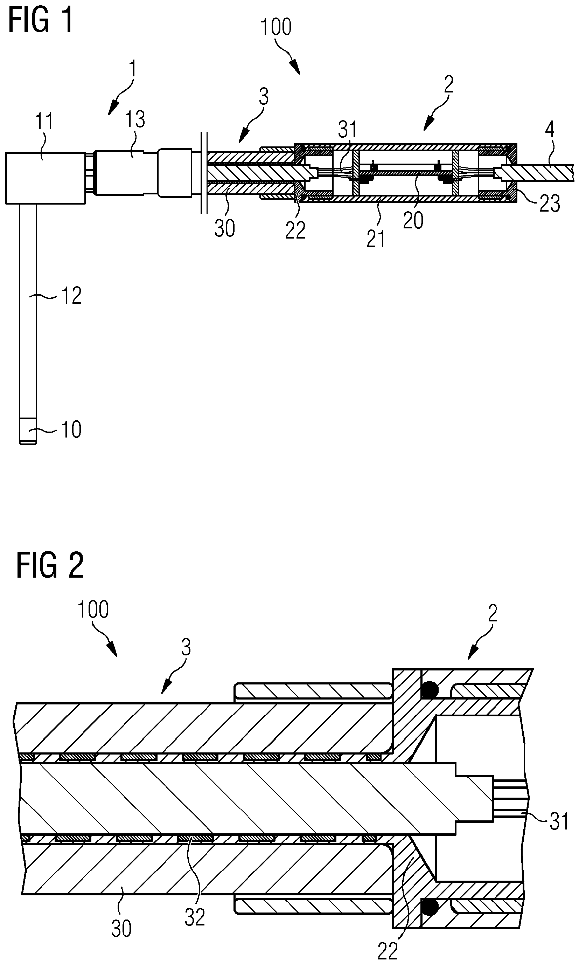

In Figur 1 ist ein Ausführungsbeispiel für eine Sensorvorrichtung 100 mit einem Sensorkopf, einem elektronischen Bauelement 2 und einem Entkopplungselement 3 gezeigt, wobei das elektronische Bauelement 2 und ein Teil des Entkopplungselements 3 zur besseren Erläuterung aufgeschnitten dargestellt sind. Die Sensorvorrichtung 100 ist besonders bevorzugt eine Sensorvorrichtung für ein Schienenfahrzeug und beispielsweise dazu vorgesehen und ausgebildet, zumindest einen Parameter eines Antriebselements des Schienenfahrzeugs zu messen.

Die Sensorvorrichtung 100 ist rein beispielhaft als Temperatursensorvorrichtung ausgebildet und weist den Sensorkopf 1 mit zumindest einem Sensorelement 10 auf. Das Sensorelement ist rein beispielhaft als PT100-Sensorelement, also basierend auf einem Kaltleiter-Material, ausgebildet. Die Ausbildung der Sensorvorrichtung 100 als Temperatursensorvorrichtung mit einem PT100-Sensorelement ist nicht beschränkend zu verstehen. Vielmehr ist auch ein anderer Typ von Temperatursensorelement möglich. Weiterhin sind auch andere Sensorelemente sowie mehr als ein Sensorelement möglich. Insbesondere ist es auch möglich, dass die Sensorvorrichtung 100 anstatt oder zusätzlich zu einer Temperatur beispielsweise eine Vibration und/oder eine Beschleunigung misst und zumindest ein entsprechend dafür geeignetes Sensorelement, beispielsweise ausgebildet als MEMS-Element, aufweist.

Der Sensorkopf 1 weist einen Kopfteil 11 auf, der beispielsweise aus Metall ist und an dem ein dünnes metallisches Rohr 12 befestigt ist oder der in einen solches Rohr übergeht. An dem zum Kopfteil 11 entfernt angeordneten Ende des Rohrs 12 ist das zumindest eine Sensorelement 10 angeordnet. Im Rohr 12 und im Kopfteil 11 weist der Sensorkopf 1 elektrische Zuleitungen zur elektrischen Kontaktierung des zumindest einen Sensorelements 10 auf. Der Sensorkopf 1 ist so dimensioniert und ausgestaltet, dass ein möglichst geringer Platzbedarf bei einer ausreichenden Stabilität gewährleistet ist. Die gezeigte Form des Sensorkopfs 1 ist ebenfalls rein beispielhaft und nicht beschränkend zu verstehen. Insbesondere kann die Form des Sensorkopfs 1, also beispielsweise die Geometrie und Größe, an die äußeren Gegebenheiten des Messorts angepasst sein.

Das Sensorelement 10 stellt im Betrieb ein analoges Messsignal bereit. Im Falle des beispielhaften PT100-Sensorelements ist das analoge Messsignal eine elektrische Größe, die vom elektrischen Widerstand des Sensorelements 10 abhängt. Die Sensorvorrichtung 100 weist weiterhin das elektronische Bauelement 2 auf, das dazu vorgesehen und eingerichtet ist, das analoge Messsignal in ein digitales Signal umzuwandeln. Hierzu weist das elektronische Bauelement 2 zumindest eine Wandlerelektronik 20 auf, die aus dem analogen Messsignal ein digitales Signal erzeugt. Die Wandlerelektronik 20 weist hierzu zumindest einen Analog-Digital-Wandler auf. Wie im allgemeinen Teil beschrieben ist, ist das digitale Signal weniger anfällig gegenüber Störsignalen wie beispielsweise elektromagnetischen Feldern, so dass eine verlässliche Weiterleitung des digitalen Signals erheblich einfacher ist als die des analogen Messsignals. Dadurch, dass das elektronische Bauelement 2 mit der Wandlerelektronik 20 getrennt vom Sensorkopf 1 ausgebildet ist, wird eine geringe Baugröße des Sensorkopfs 1 ermöglicht. Weiterhin kann das elektronische Bauelement 2 zusätzliche elektronische Komponenten zur Signalverarbeitung aufweisen, beispielsweise einen oder mehrere Filter und/oder einen oder mehrere Verstärker. Die Wandlerelektronik 20 sowie gegebenenfalls weitere elektronische Komponenten sind wie gezeigt beispielsweise in Form einer bestückten Leiterplatte ausgebildet.

Zwischen dem Sensorkopf 1 und dem elektronischen Bauelement 2 weist die Sensorvorrichtung 100 das Entkopplungselement 3 auf. Durch das Entkopplungselement 3 wird das analoge Messsignal vom Sensorkopf 1 zum elektronischen Bauelement 2 geleitet. Hierzu weist das Entkopplungselement 3 entsprechende elektrische Leitungen 31 auf. Das Entkopplungselement 3 ist weiterhin dazu vorgesehen und eingerichtet, das elektronische Bauelement 2 zumindest teilweise thermisch und/oder mechanisch vom Sensorkopf 1 zu entkoppeln. Durch das Entkopplungselement 3 ist es somit bevorzugt möglich, dass die Übertragung von Wärme und/oder von mechanischen Beeinträchtigungen wie beispielsweise Vibrationen vom Sensorkopf 1 auf das elektronische Bauelement 2 geringer ist als im Fall einer Anordnung des elektronischen Bauelements direkt am oder im Sensorkopf. Dadurch kann die mechanische und thermische Belastung des elektronischen Bauelements 2 im Vergleich zur mechanischen und thermischen Belastung des Sensorkopfs 1 herabgesetzt werden.

Das Entkopplungselement 3 ist bevorzugt flexibel ausgebildet, so dass eine mechanische Entkopplung erreicht werden kann. Weiterhin ermöglicht die Flexibilität des Entkopplungselements 3 einen erhöhten Freiheitsgrad bei der Wahl der Einbaupositionen des Sensorkopfs 1 und des elektronischen Bauelements 2 relativ zueinander. Das Entkopplungselement 3 ist beispielsweise plastisch verformbar, so dass die Form des Entkopplungselements 3 bei einer Biegung erhalten bleibt. Alternativ hierzu ist das Entkopplungselement 3 elastisch verformbar.

Das Entkopplungselement 3 weist eine schlauchförmige Hülle 30 auf, in der die elektrischen Leitungen 31 zur elektrischen Verbindung des Sensorkopfs 1 mit dem elektronischen Bauelement 2 angeordnet sind. Wie in Figur 1 beispielhaft gezeigt ist, können die Leitungen 31 in Form eines Kabels in der Hülle 30 angeordnet sein. Die Hülle 30 weist beispielsweise einen Kunststoff wie etwa Silikon und/oder synthetischen Kautschuk auf. Durch solche Materialien kann eine wirkungsvolle thermische Entkopplung erreicht werden.

Zusätzlich kann die Hülle 3 eine Armierung (nicht gezeigt), beispielsweise in Form eines Metallgeflechts, aufweisen, das die Stabilität der Hülle bei gleichzeitigem Erhalt einer Flexibilität erhöhen kann. Insbesondere kann die Hülle 30 nach Art eines Hydraulikschlauchs ausgebildet sein. Die Armierung kann beispielsweise auch als elektromagnetische Schirmung ausgebildet sein, wodurch die im Entkopplungselement 3 verlaufenden elektrischen Leitungen 31 von elektromagnetischen Störungen abschirmt werden können.

Das elektronische Bauelement 2 weist bevorzugt ein rohrförmiges Gehäuse 21 auf, in dem die Wandlerelektronik 20 angeordnet ist. Besonders bevorzugt weist das Gehäuse 21 wie gezeigt einen Durchmesser auf, der im Wesentlichen dem Durchmesser der Hülle 30 des Entkopplungselements 3 entspricht, so dass der Durchmesser der Hülle 30 und der Durchmesser des Gehäuses 21 um nicht mehr als 20%, bevorzugt um nicht mehr als 10% und besonders bevorzugt um nicht mehr als 5%, jeweils bezogen auf den Durchmesser der Hülle 30, voneinander abweichen. Das Gehäuse 21 ist bevorzugt ein Metallgehäuse. Dadurch kann eine ausreichende Stabilität sowie eine elektromagnetische Schirmung für die im Gehäuse 21 angeordnete Wandlerelektronik 20 erreicht werden.

Das Entkopplungselement 3 ist in den gezeigten Ausführungsbeispielen mit dem Sensorkopf 1 und mit dem elektronischen Bauelement 2 dauerhaft verbunden, so dass der Sensorkopf 1, das Entkopplungselement 3 und das elektronische Bauelement 2 bevorzugt eine im normalen Betrieb, also normalen Betriebs- und Wartungsbedingungen, dauerhafte Einheit bilden. Unter normalen Betriebs- und Wartungsbedingungen sind der Sensorkopf 1, das Entkopplungselement 3 und das elektronische Bauelement 2 somit nicht trennbar. Eine dauerhafte Verbindung wird durch eine oder mehrere der folgenden Verbindungstechniken erreicht: Pressen, Klemmen, Verschrauben, Verkleben, Vergießen mit einem Kunststoff zumindest im Bereich einer Verbindungsstelle. Der Sensorkopf 1 weist im gezeigten Ausführungsbeispiel zum Anschluss des Entkopplungselements 3 ein Anschlussteil 13, beispielsweise aus Metall, auf, der dauerhaft mit der Hülle 30 des Entkopplungselements 3 verbunden ist. Weiterhin weist das elektronische Bauelement 2 einen Eingang 22 auf, der ebenfalls dauerhaft mit der Hülle 30 verbunden ist und durch den die elektrischen Leitungen 31 ins Innere des Gehäuses 21 zur Wandlerelektronik 20 reichen. Das Gehäuse 21 kann hierzu wie gezeigt beispielsweise eine Art Kragen aufweisen, der über einen Teil der Hülle 30 geschoben ist.

Das elektronische Bauelement 2 weist einen Ausgang 23 auf, an dem das von der Wandlerelektronik 20 erzeugte digitale Signal bereitgestellt wird. Am Ausgang 23 ist im gezeigten Ausführungsbeispiel ein Kabel 4 nach außen geführt, über das das digitale Signal weitergeleitet wird. Beispielsweise kann ein offenes Kabelende für eine Klemmkontaktierung oder den Anschluss eines Steckers vorhanden sein. Da am Ausgang 23 des elektronischen Bauelements 2 das aus dem analogen Messsignal erzeugte digitale Signal bereitgestellt wird, sind die elektromagnetischen Schirmungsanforderungen an das Kabel 4 mit Vorteil erheblich geringer als die Schirmungsanforderungen an das Entkopplungselement 3, in dem das analoge Messsignal geführt wird.

Das Entkopplungselement 3 bietet wie beschrieben den Vorteil einer thermischen Entkopplung des Sensorkopfs 1 vom elektronischen Bauelement 2. Weiterhin ermöglicht es eine mechanische Entkopplung, insbesondere in Bezug auf Vibrationen. Durch die beschriebene Hülle 30 wird außerdem ein Schutz der elektrischen Leitungen 31, also ein Kabelschutz, ermöglicht, insbesondere auch in Bezug auf Ermüdung durch Vibration, Kabelbruch durch zu geringe Biegeradien und mechanische Beschädigungen beispielsweise durch Steinschlag. Das Entkopplungselement 3 ist weiterhin durch seinen einfachen und gleichzeitig wirkungsvollen Aufbau flexible in Stärke und Länge wählbar.

Weiterhin kann auch eine elektromagnetische Schirmung zur Abschirmung des analogen Messsignals im Entkopplungselement 3 in Form eines Metallgeflechts oder in Form einer Metallschicht im Kunststoffmaterial der Hülle 30 oder innerhalb der Hülle 30 oder an der Hülle 30 des Entkopplungselements 3 vorhanden sein. Eine solche Schirmung 32, beispielsweise in Form einer Metallfolie oder einem Metallgeflecht, zwischen der Hülle 30 und den elektrischen Leitungen 31 ist in Figur 2 in einem Ausschnitt einer Sensorvorrichtung 100 gemäß einem weiteren Ausführungsbeispiel angedeutet. Die Schirmung 32 kann alternativ dazu auch innerhalb des in Figur 2 gezeigten die Leitungen 31 führenden Kabels angeordnet sein.

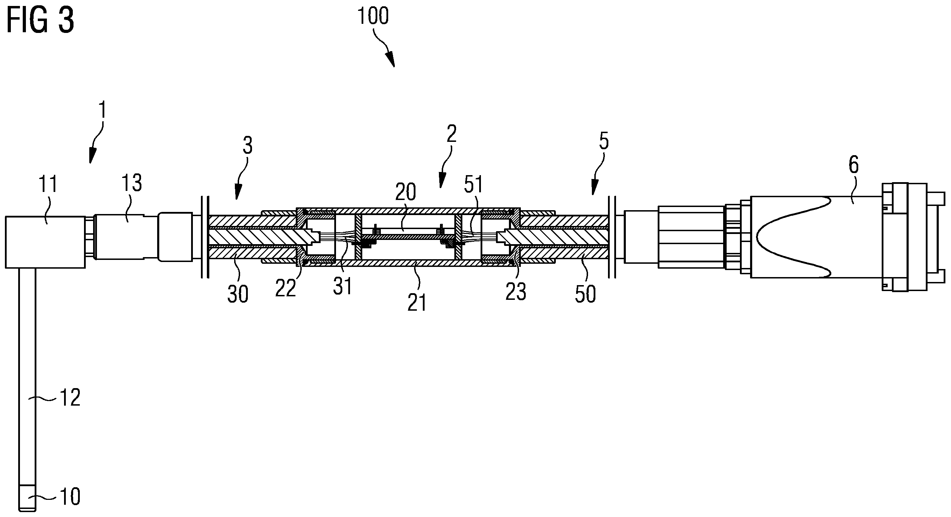

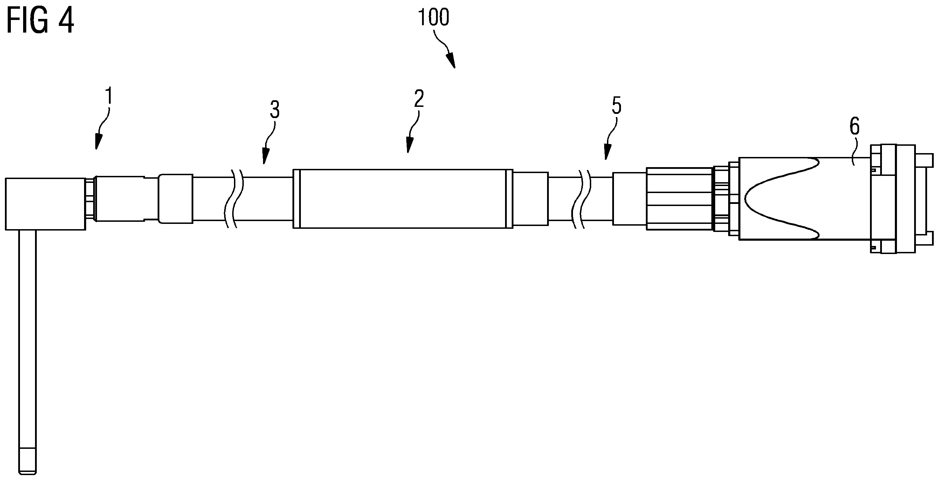

In den Figuren 3 und 4 ist in einer teilweise aufgeschnitten Ansicht entsprechend der Ansicht der Figur 1 und in einer Außenansicht ein weiteres Ausführungsbeispiel für eine Sensorvorrichtung 100 gezeigt, die im Vergleich zu den vorherigen Ausführungsbeispielen am Ausgang 23 des elektronischen Bauelements 2 ein weiteres Entkopplungselement 5 aufweist. Das weitere Entkopplungselement 5 kann in Bezug auf seine Hülle 50 und/oder die elektrischen Leitungen 51 sowie auch in Bezug auf weitere Merkmale wie beispielsweise eine Schirmung und/oder die Verbindung mit dem elektrischen Bauelement 2 Merkmale aufweisen, die vorab in Bezug auf das Entkopplungselement 3 beschrieben sind. Insbesondere können die Entkopplungselemente 3 und 5 in Bezug auf die Hüllen 30 und 50 gleich ausgebildet sein und sich allenfalls im Hinblick auf die jeweilige Anzahl der elektrischen Leitungen 31 und 51 beziehungsweise im Hinblick auf das in der jeweiligen Hülle 30, 50 angeordnete Kabel mit den Leitungen 31, 51 unterscheiden. Während also in Verbindung mit der Figur 1 ein Ausführungsbeispiel mit einer einseitigen Ausbildung mit einem Entkopplungselement 3 gezeigt ist, weist das Ausführungsbeispiel der Figuren 3 und 4 eine mehrseitige Entkopplungselement-Ausbildung auf.

Weiterhin ist im gezeigten Ausführungsbeispiel der Ausgang 23 des elektronischen Bauelements 2 über das weitere Entkopplungselement 5 mit einem Steckerelement 6, das ein weiblicher oder männlicher Stecker oder eine entsprechende Buchse sein kann und einen ein- oder mehrkanaligen Datenbus aufweisen kann, verbunden, über das die Sensorvorrichtung 100 mittels einer elektrischen Steckverbindung mit weiteren elektronischen Komponenten wie beispielsweise einer Strom- und/oder Spannungsversorgung und/oder einer Datenverarbeitungsvorrichtung verbunden werden kann. Der Ausgang 23 des elektronischen Bauelements 2 kann alternativ auch unmittelbar mit dem Steckerelement 6 verbunden sein. Alternativ hierzu kann zwischen dem Ausgang 23 des elektronischen Bauelements 2 und dem Steckerelement 6 ein Verbindungskabel wie das in Figur 1 gezeigte Kabel 4 vorhanden sein.

Im Vergleich zu Anordnungen einer Wandlerelektronik in oder direkt an einem Sensorkopf können sich bei der Sensorvorrichtung 100 gemäß den hier beschriebenen Ausführungsbeispielen somit mehrere Vorteile ergeben, beispielsweise eine geringere Aufbauhöhe des Sensorkopfs, eine geringere starre Länge in Bezug auf den Biegeradius des direkt am Sensorkopf ansetzenden Elements und eine mechanische und/oder thermische Entkopplung der Wandlerelektronik sowie auch eines an der Wandlerelektronik angebrachten Steckers.

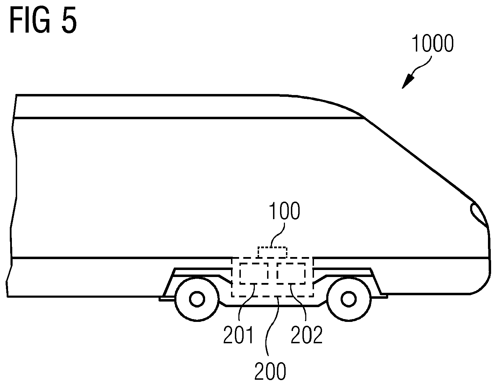

In Figur 5 ist in einen Ausschnitt ein Ausführungsbeispiel für ein Schienenfahrzeug 1000 mit einer Sensorvorrichtung 100 gezeigt, die gemäß dem vorherigen Ausführungsbeispiel ausgebildet ist. Das Schienenfahrzeug 1000 weist ein Antriebselement 200 auf, das beispielsweise einen Motor 201 wie etwa einen Traktionsmotor und/oder ein Getriebe 202 wie etwa ein Traktionsgetriebe aufweist oder alternativ dazu ist. Die Sensorvorrichtung 100 ist am Antriebselement 200 angeordnet, so dass die Sensorvorrichtung 100 zumindest einen Parameter des Antriebselements 200, entsprechend den vorherigen Ausführungsbeispielen also etwa eine Temperatur, messen kann. Eine norm- und vorgabengerechte Integration der Sensorvorrichtung 100 am Antriebselement 200 ist aufgrund des durch das Entkopplungselement vom Sensorkopf entkoppelten elektronischen Bauelements leichter möglich als bei üblichen Sensoren mit direkt in oder an den Sensorkopf integrierter Digitalisierungselektronik.

Die Erfindung wird durch die Ansprüche definiert.

### Bezugszeichenliste

- 1: Sensorkopf
- 2: elektronisches Bauelement
- 3: Entkopplungselement
- 4: Kabel
- 5: Entkopplungselement
- 6: Steckerelement
- 10: Sensorelement
- 11: Kopfteil
- 12: Rohr
- 13: Anschlussteil
- 20: Wandlerelektronik
- 21: Gehäuse
- 22: Eingang
- 23: Ausgang
- 30: Hülle
- 31: elektrische Leitung
- 32: Schirmung
- 50: Hülle
- 51: elektrische Leitung
- 100: Sensorvorrichtung
- 200: Antriebselement
- 201: Motor
- 202: Getriebe
- 1000: Schienenfahrzeug

## Patentansprüche

1. Sensorvorrichtung (100) für ein Schienenfahrzeug (1000), aufweisend
- einen Sensorkopf (1) mit zumindest einem Sensorelement (10), das im Betrieb ein analoges Messsignal bereitstellt,
- ein elektronisches Bauelement (2), das zumindest eine Wandlerelektronik (20) aufweist, die aus dem analogen Messsignal ein digitales Signal erzeugt,
- ein Entkopplungselement (3), das das analoge Messsignal vom Sensorkopf (1) zum elektronischen Bauelement (2) leitet und das das elektronische Bauelement (2) zumindest teilweise thermisch und/oder mechanisch vom Sensorkopf (1) entkoppelt, wobei das Entkopplungselement (3) eine schlauchförmige Hülle (30) aufweist, in welcher zumindest eine elektrische Leitung (31) zur elektrischen Verbindung des Sensorkopfs (1) mit dem elektronischen Bauelement (2) angeordnet ist, wobei das Entkopplungselement (3) flexibel ist, wobei das Entkopplungselement (3) eine elektromagnetische Schirmung (32) aufweist, und wobei das Entkopplungselement (3) dauerhaft jeweils mit dem Sensorkopf (1) und dem elektronischen Bauelement (2) verbunden ist.

2. Sensorvorrichtung (100) nach Anspruch 1, wobei das elektronische Bauelement (2) ein rohrförmiges Gehäuse (21) aufweist, in dem die Wandlerelektronik (20) angeordnet ist.

3. Sensorvorrichtung (100) nach Anspruch 2, wobei das Gehäuse (21) ein Metall aufweist.

4. Sensorvorrichtung (100) nach Anspruch 2, wobei das Gehäuse (21) einen Durchmesser aufweist, der im Wesentlichen einem Durchmesser der Hülle (30) entspricht.

5. Sensorvorrichtung (100) nach einem der Ansprüche 1 und 4, wobei die Hülle (30) einen Kunststoff aufweist.

6. Sensorvorrichtung (100) nach einem der vorherigen Ansprüche, wobei das elektronische Bauelement (2) einen Ausgang (23) aufweist, an dem das digitale Signal bereitgestellt wird und an dem ein weiteres Entkopplungselement (5) angeordnet ist.

7. Sensorvorrichtung (100) nach einem der vorherigen Ansprüche, wobei das elektronische Bauelement (2) einen Ausgang (23) aufweist, an dem das digitale Signal bereitgestellt wird und der mit einem Steckerelement (6) verbunden ist.

8. Sensorvorrichtung (100) nach einem der vorherigen Ansprüche, wobei das zumindest eine Sensorelement (10) vorgesehen und eingerichtet ist zur Messung zumindest einer oder mehrerer der folgenden Parameter: Temperatur, Beschleunigung, Vibration.

9. Schienenfahrzeug (1000), aufweisend ein Antriebselement (200) und eine am Antriebselement (200) angeordnete Sensorvorrichtung (100) gemäß einem der vorherigen Ansprüche.

10. Schienenfahrzeug (1000) nach Anspruch 9, wobei das Antriebselement (200) einen Motor (201) und/oder ein Getriebe (202) aufweist.

## Claims

1. Sensor apparatus (100) for a rail vehicle (1000), having
- a sensor head (1) with at least one sensor element (10), which provides an analogue measurement signal during operation,
- an electronic structural element (2), which has at least one converter electronic system (20) that generates a digital signal from the analogue measurement signal,
- a decoupling element (3), which conducts the analogue measurement signal from the sensor head (1) to the electronic structural element (2) and which at least partially thermally and/or mechanically decouples the electronic structural element (2) from the sensor head (1), wherein the decoupling element (3) has a hose-shaped sleeve (30), in which at least one electrical line (31) for electrically connecting the sensor head (1) to the electronic structural element (2) is arranged, wherein the decoupling element (3) is flexible, wherein the decoupling element (3) has an electromagnetic shield (32), and wherein the decoupling element (3) is permanently connected to the sensor head (1) and the electronic structural element (2) in each case.

2. Sensor apparatus (100) according to claim 1, wherein the electronic structural element (2) has a tube-shaped housing (21), in which the converter electronics system (20) is arranged.

3. Sensor apparatus (100) according to claim 2, wherein the housing (21) features a metal.

4. Sensor apparatus (100) according to claim 2, wherein the housing (21) has a diameter that substantially corresponds to a diameter of the sleeve (30).

5. Sensor apparatus (100) according to one of claims 1 and 4, wherein the sleeve (30) features a plastic.

6. Sensor apparatus (100) according to one of the preceding claims, wherein the electronic structural element (2) has an output (23), at which the digital signal is provided and at which a further decoupling element (5) is arranged.

7. Sensor apparatus (100) according to one of the preceding claims, wherein the electronic structural element (2) has an output (23), at which the digital signal is provided and which is connected to a plug element (6).

8. Sensor apparatus (100) according to one of the preceding claims, wherein the at least one sensor element (10) is provided and configured to measure at least one or more of the following parameters: temperature, acceleration, vibration.

9. Rail vehicle (1000), having a drive element (200) and a sensor apparatus (100), which is arranged on the drive element (200), according to one of the preceding claims.

10. Rail vehicle (1000) according to claim 9, wherein the drive element (200) has a motor (201) and/or a gear unit (202).

## Revendications

1. Dispositif (100) capteur d'un véhicule (1000) ferroviaire, comportant
- une tête (1) de capteur ayant au moins un élément (10) capteur, qui en fonctionnement met à disposition un signal analogique de mesure,
- un composant (2) électronique, qui a au moins une électronique (20) de convertisseur, qui produit un signal numérique à partir du signal analogique de mesure,
- un élément (3) de découplage, qui achemine le signal analogique de mesure de la tête (1) du capteur au composant (2) électronique et qui découple le composant (2) électronique thermiquement et/ou mécaniquement au moins en partie de la tête (1) du capteur, dans lequel l'élément (3) de découplage a un manchon (30) en forme de tube souple, dans lequel est disposé au moins une ligne (31) électrique de liaison électrique de la tête (1) du capteur au composant (2) électronique, dans lequel l'élément (3) de découplage est souple, dans lequel l'élément (3) de découplage a un blindage (32) électromagnétique et dans lequel l'élément (3) de découplage est relié, d'une manière permanente, respectivement à la tête (1) du capteur et au composant (2) électronique.

2. Dispositif (100) capteur suivant la revendication 1, dans lequel le composant (2) électronique a un boîtier (21) tubulaire, dans lequel est disposée l'électronique (20) de convertisseur.

3. Dispositif (100) capteur suivant la revendication 2, dans lequel le boîtier (21) a un métal.

4. Dispositif (100) capteur suivant la revendication 2, dans lequel le boîtier (21) a un diamètre, qui correspond sensiblement au diamètre du manchon (30).

5. Dispositif (100) capteur suivant la revendication 1 et 4, dans lequel le manchon (30) a une matière plastique.

6. Dispositif (100) capteur suivant l'une des revendications précédentes, dans lequel le composant (2) électronique a une sortie (23), à laquelle le signal numérique est mis à disposition et sur laquelle un autre élément (5) de découplage est disposé.

7. Dispositif (100) capteur suivant l'une des revendications précédentes, dans lequel le composant (2) électronique a une sortie (23), à laquelle le signal numérique est mis à disposition et qui est reliée à un élément (6) de connectique mâle.

8. Dispositif (100) capteur suivant l'une des revendications précédentes, dans lequel le au moins un élément (10) capteur est prévu et conçu pour la mesure d'au moins un ou plusieurs des paramètres suivants : température, accélération, vibration.

9. Véhicule (1000) ferroviaire ayant un élément (200) d'entraînement et un dispositif (100) capteur suivant l'une des revendications précédentes, qui est monté sur l'élément (200) d'entraînement.

10. Véhicule (1000) ferroviaire suivant la revendication 9, dans lequel l'élément (100) d'entraînement a un moteur (201) et/ou une transmission (202).
